# EUROPÄISCHE PATENTSCHRIFT

(11) **EP 4 474 660 B1**
(45) Veröffentlichungstag und Bekanntmachung des Hinweises auf die Patenterteilung: **04.03.2026**
(21) Anmeldenummer: 24178026.1
(22) Anmeldetag: 24.05.2024
(51) Int. Cl.: F16B 37/14, F16B 33/00

(54) **SCHUTZKAPPE**
PROTECTIVE CAP
CAPUCHON PROTECTEUR

(30) Priorität: 05.06.2023 DE 102023205215
(43) Veröffentlichungstag der Anmeldung: 11.12.2024
(73) Patentinhaber: Aktiebolaget SKF, 415 50 Göteborg (SE)
(72) Erfinder: Weiglein, Juergen, 97714 Oerlenbach (DE); Memmel, Marcel Alfred, 97714 Ebenhausen (DE)
(74) Vertreter: Kuhstrebe, Jochen

(56) Entgegenhaltungen:
- WO-A1-2020/217386
- DE-A1- 3 033 714
- DE-U1- 202020 103 617
- JP-U- H0 614 530
- JP-U- S60 122 020
- US-A- 6 053 681

## Beschreibung

### Technisches Gebiet

Vorliegende Erfindung betrifft eine Schutzkappe für eine Befestigungsschraube, insbesondere eine Befestigungsschraube in einer Unterwasseranwendung, gemäß dem Oberbegriff von Patentanspruch 1.

### Technischer Hintergrund

In verschiedenen technischen Gebieten, z.B. bei Offshore-Anlagen, ist es erforderlich, Elemente am Boden oder auf Plattformen zu verankern. Hierzu werden üblicherweise Befestigungsschrauben verwendet, wobei beispielsweise eine dynamisch belastete Steckschraubverbindung verwendet werden kann. Hierbei wird eine Schraube in den Boden oder die Plattform eingeschraubt und das zu befestigende Element auf diese Schraube aufgesetzt. Um das Element mit dem Boden oder der Plattform zu verbinden, wird die Schraube gedehnt und eine Mutter aufgeschraubt. Bei solchen Schraubverbindungen steht ein Teil des Gewindes heraus und ist den Umgebungsbedingungen, d. h. Wasser, Wind etc., ausgesetzt. Gerade in Unterwasseranwendungen bedeutet dies, dass das herausstehende Gewinde Seewasser ausgesetzt ist, was eine korrosive und aggressive Umgebung darstellt. Die herausstehende Gewindeschraube wird dabei zum einen an der Oberfläche angegriffen und zum anderen verunreinigt, beispielsweise mit Muscheln oder ähnlichem bevölkert. Um jedoch die Schraubverbindung nach einer bestimmten Zeit nachziehen zu können oder um die Schraubverbindung lösen zu können, ist eine saubere und unbeschadete Oberfläche des Schraubgewindes erforderlich.

Bislang wurden spezielle Beschichtungen für Befestigungsschrauben verwendet, wobei diese Beschichtungen die Oberflächen zum einen nicht vor Bewuchs mit Unterwasserpflanzen/Lebewesen schützen können und zum anderen während des Spannprozesses (entweder während der Anfangsbefestigung oder beim Nachziehen) einfach beschädigt werden können. Wenn eine solche Beschichtung beschädigt wurde, ist die Befestigungsschraube nicht mehr länger geschützt. Zwar kann die Beschichtung repariert werden, dies ist allerdings im Unterwassereinsatz nicht in derselben Qualität möglich, wie sie die Beschichtung ursprünglich bereitgestellt hat. Das bedeutet, dass das Befestigungselement bzw. die Befestigungsschraube ersetzt werden muss.

Zwar existieren Schutzkappen für solche Befestigungsschrauben, allerdings sind diese nicht für einen Unterwassereinsatz geeignet und bieten keine ausreichende Abdichtung der Befestigungsschraube gegenüber den Einflüssen, wie sie beim Unterwassereinsatz gegeben sind. Des Weiteren kann keine ausreichende Befestigung der Schutzkappe auf der Befestigungsschraube gewährleistet werden. Gerade im Unterwassereinsatz ist eine ausreichende Verbindung zwischen einer solchen Schutzkappe und eine Befestigungsschraube erforderlich, da durch die herausfordernden Anforderungen im Unterwassereinsatz, d. h. Gezeiten, Strömungen, korrosive und aggressive Umgebung, etc., auch die Verbindung zwischen der Schutzkappe und der Befestigungsschraube erhöhten Anforderungen ausgesetzt ist.

Eine Schutzkappe ist aus der JPH0614530U bekannt.

Es ist deshalb Aufgabe vorliegender Erfindung, eine Schutzkappe für eine solche Befestigungsschraube, insbesondere eine Befestigungsschraube für Unterwasseranwendungen, bereitzustellen, die es ermöglicht ein herausstehendes Gewinde der Befestigungsschraube sauber und unbeschädigt zu erhalten.

### Zusammenfassung der Erfindung

Diese Aufgabe wird durch eine Schutzkappe für eine Befestigungsschraube, insbesondere eine Befestigungsschraube im Unterwassereinsatz, gemäß Patentanspruch 1 gelöst.

Die Schutzkappe weist einen zylindrischen Körper mit einer inneren und einer äußeren Mantelfläche auf, wobei der zylindrische Körper an einem Ende geschlossen ist und mit dem anderen, offenen Ende auf die Befestigungsschraube aufschiebbar ist. Die innere Mantelfläche bildet dabei eine Innenaufnahme, in der die Befestigungsschraube aufnehmbar ist. Um nun im Vergleich zu bisherigen Schutzkappen, die lediglich auf die Befestigungsschraube aufgeschoben wurden, eine sichere Verbindung zwischen der Schutzkappe und der Befestigungsschraube sicherzustellen, ist an dem geschlossenen Ende der Schutzkappe eine Durchgangsbohrung vorgesehen, durch die eine Schraube durchführbar ist. Diese Schraube ist dazu ausgebildet, in ein entsprechendes Bohrloch in der Befestigungsschraube einzugreifen, um die Schutzkappe mit der Befestigungsschraube zu verbinden. Das bedeutet, dass die Schutzkappe zunächst auf die Befestigungsschraube aufgesetzt wird und anschließend eine Schraube von außen durch die Durchgangsbohrung in der Schutzkappe in das entsprechende Bohrloch in der Befestigungsschraube eingeschraubt wird. Auf diese Weise wird im Vergleich zu bisherigen Schutzkappen eine sicherere Verbindung zwischen der Schutzkappe und der Befestigungsschraube sichergestellt.

Soll die Befestigungsschraube wieder gelöst oder nachgezogen werden, kann die Schutzkappe einfach durch Lösen der Schraube von der Befestigungsschraube entfernt werden. Durch die Schutzkappe wird die Befestigungsschraube so geschützt, dass nach einem Entfernen der Schutzkappe ein freiliegendes Gewinde der Befestigungsschraube unbeschädigt ist und daher die Befestigungsschraube einfach nachgezogen oder auch entfernt bzw. gelöst werden kann.

Um zusätzlich eine Abdichtung der Befestigungsschraube zu ermöglichen, kann gemäß einer Ausführungsform eine Dichtung zwischen der Schraube und dem geschlossenen Ende angeordnet sein. Das bedeutet, dass das geschlossene Ende der Schutzkappe durch diese Dichtung abgedichtet wird. Durch die Schraube ist die Dichtung mit der Schutzkappe fest verbunden. Auf diese Weise kann sichergestellt werden, dass keine Verunreinigungen oder Wasser von außen in die Schutzkappe durch die Durchgangsbohrung für die Schraube eindringen können.

Gemäß einer weiteren Ausführungsform ist ein Innenraum der Schutzkappe mit Schmiermittel und/oder Korrosionsschutzmittel gefüllt. Im Folgenden kann bei Verwendung/Erwähnung eines Schmiermittels alternativ oder zusätzlich immer auch ein Korrosionsschutzmittel verwendet werden. Vorzugsweise kann die Schutzkappe vor dem Aufbringen auf die Befestigungsschraube mit Schmiermittel gefüllt werden. Über die Durchgangsbohrung zum Durchführen der Schraube kann dann überschüssiges Schmiermittel beim Aufbringen der Schutzkappe auf die Befestigungsschraube austreten. Auf diese Weise ist die Schutzkappe im Inneren komplett mit Schmiermittel gefüllt und kann somit zusätzlich die Befestigungsschraube vor Verunreinigungen und Wasserkontakt schützen.

Erfindungsgemäß ist an dem offenen Ende des zylindrischen Körpers der Schutzkappe eine Dichtung vorgesehen, die dazu ausgebildet ist, die Schutzkappe gegenüber der Befestigungsschraube abzudichten. Zusätzlich oder alternativ zu einer Abdichtung an dem geschlossenen Ende bzw. der Durchgangsbohrung an dem geschlossenen Ende wird somit auch das offene Ende des zylindrischen Körpers abgedichtet. Die Dichtung ist dabei vorzugsweise in Kontakt mit der Befestigungsschraube, oder der Mutter zum Sichern der Befestigungsschraube, und dichtet so den Innenraum der Schutzkappe vor Verunreinigungen und Wassereintritt ab.

Erfindungsgemäß ist die Dichtung an der inneren Mantelfläche der Schutzkappe angeordnet und ist mit zumindest einer Dichtlippe versehen, die sich von der inneren Mantelfläche radial nach innen erstreckt. Vorzugsweise erstreckt sich die Dichtung von der inneren Mantelfläche über den Rand des offenen Endes bis zur äußeren Mantelfläche. Das bedeutet, dass die Dichtung das offene Ende der Schutzkappe überziehen kann. Des Weiteren ist es möglich, dass die Dichtung mit mehreren Dichtlippen versehen ist, die sich von der inneren Mantelfläche radial nach innen erstrecken. Diese Dichtlippen haben den Vorteil, dass sie die Befestigungsmutter an verschiedenen Positionen kontaktieren können. Gerade bei Verwendung von mehreren Dichtlippen hat dies den Vorteil, dass, wenn die äußerste Dichtlippe beschädigt ist oder der Wasserdruck zu hoch ist und die äußerste Dichtlippen überwinden kann, die nachfolgende Dichtlippen weitere Abdichtungen bereitstellen. Dies verbessert die Gesamtdichtwirkung der Dichtung bzw. der Schutzkappe.

Die Dichtung kann mehrere, axial übereinander angeordnete Dichtringe umfassen. Diese Dichtringe können auch über den Bereich der Schutzkappe bzw. das äußere offene Ende der Schutzkappe hinausreichen, und die Schutzkappe gegenüber der Befestigungsschraube abzudichten. Die Dichtringe können somit die Schutzkappe auch in ihrer Längsausdehnung, d. h. in axialer Richtung der Befestigungsschraube, erstrecken. Auf diese Weise kann die Schutzkappe mit solchen Dichtringen an verschiedene Längen von Befestigungsschrauben angepasst werden und diese zuverlässig abdichten. Wenn die Schutzkappe direkt auf der Grundfläche aufliegt, kann die Schutzkappe, wenn sie mit der Befestigungsschraube verschraubt wird, zusätzlich axialen Druck auf die Dichtringe ausüben und diese gegen die Grundfläche drücken. Die Dichtringe können somit in ihrer Position gesichert werden. Des Weiteren können die Dichtringe auf diese Weise komprimiert werden und damit die Dichtwirkung der Dichtringe sicherstellen.

Gemäß einer weiteren Ausführungsform ist die Schutzkappe zumindest an der äußeren Mantelfläche mit der Dichtung überzogen. Vorzugsweise kann auch die komplette Schutzkappe mit der Dichtung überzogen sein, was die Dichtwirkung der Schutzkappe weiter verbessern kann. Insbesondere kann dies in Kombination mit mehreren axial übereinander angeordneten Dichtringen und/oder mehreren Dichtlippen vorgesehen sein.

Gemäß einer weiteren Ausführungsform weist die Dichtung einen Flansch auf, der sich über den zylindrischen Körper in radialer Richtung nach außen erstreckt. Dieser Flansch kann auf dem Boden bzw. der Grundfläche oder einer Befestigungsplatte oder Plattform angeordnet sein, durch die sich die Befestigungsschraube erstreckt. Somit kann zusätzlich zu einer Abdichtung zwischen der Befestigungsschraube und der Schutzkappe auch eine Abdichtung gegenüber dem Boden oder der Grundfläche erreicht werden. Dies verbessert ebenfalls die Abdichtung der Befestigungsschraube gegenüber der Umgebung.

Die Schutzkappe besteht vorzugsweise aus Kunststoff, insbesondere PBT (Polybutylenterephtalat), PEEK (Polyetheretherketon), PP (Polypropylen) und/oder PE (Polyethylen). Insbesondere PBT bietet den Vorteil, dass dies ein robuster, temperaturbeständiger und wasserbeständiger Kunststoff ist, der gerade bei Unterwasseranwendungen der Schutzkappe eine gute Haltbarkeit verleiht. Alternativ ist es auch möglich, die Schutzkappe aus Metall, insbesondere Aluminium oder Stahl, herzustellen.

Durch die hier beschriebene Schutzkappe kann ein guter Schutz einer Befestigungsschraube, wie sie insbesondere bei Unterwasseranwendungen, wie beispielsweise bei der Befestigung von Wasserturbinen oder ähnlichem an Plattformen, verwendet wird, erreicht werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine schematische Schnittansicht einer Schutzkappe auf einer Befestigungsschraube;
- Fig. 2:: eine schematische Schnittansicht der Schutzkappe und der Befestigungsschraube von Fig. 1 in einer zweiten Anordnung;
- Fig. 3:: eine perspektivische Ansicht der Schutzkappe der Figuren 1 und 2;
- Fig. 4:: eine Ansicht der Schutzkappe von Fig. 3 von unten;
- Fig. 5:: eine schematische Schnittansicht einer Schutzkappe und einer Befestigungsschraube gemäß einer weiteren Ausführungsform;
- Fig. 6:: eine schematische Schnittansicht eines Detailausschnitts von Fig. 5;
- Fig. 7:: eine schematische Schnittansicht der Schutzkappe und der Befestigungsschraube gemäß Figuren 5 und 6 in einer zweiten Anordnung;
- Fig. 8:: eine schematische Schnittansicht eines Detailausschnitts von Fig. 7;
- Fig. 9:: eine perspektivische Ansicht einer beispielhaften Dichtung für eine Schutzkappe;
- Fig. 10:: eine schematische Schnittansicht der Dichtung von Fig. 9;
- Fig. 11:: eine weitere Ausführungsform der Dichtung von Figuren 9 und 10;
- Fig. 12:: eine perspektivische Ansicht eines Montagewerkzeugs zur Montage der Dichtelemente; und
- Fig. 13:: eine perspektivische Ansicht eines Demontagewerkzeugs der Schutzkappe.

### Detaillierte Beschreibung der Erfindung

Im Folgenden werden gleiche oder funktionell gleichwirkende Elemente mit denselben Bezugszeichen gekennzeichnet.

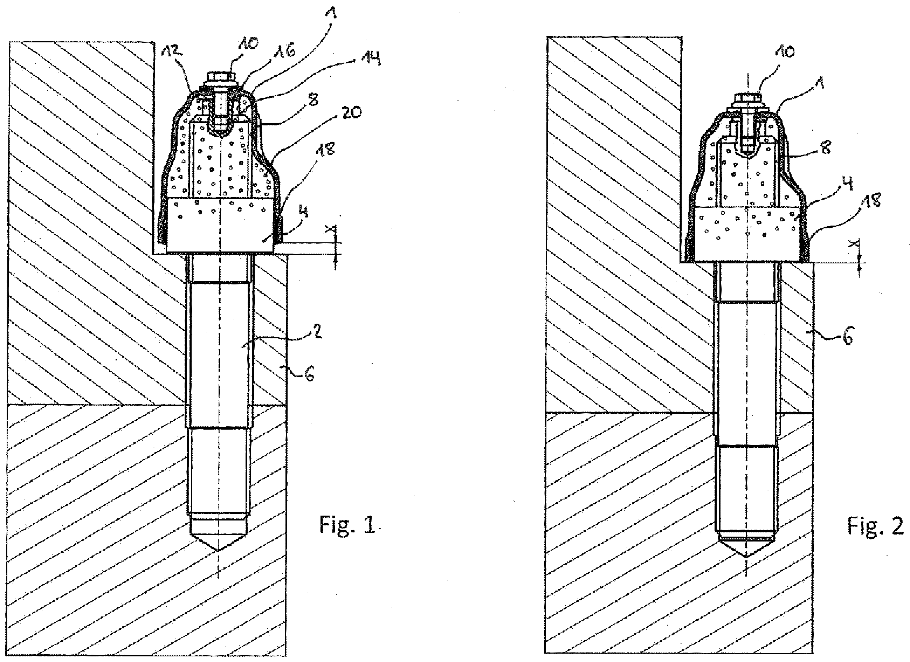

Figuren 1 und 2 zeigen eine Schutzkappe 1 für eine Befestigungsschraube 2, wobei die Befestigungsschraube 2 in Fig. 1 maximal heraussteht (um den Abstand X) und wobei die Befestigungsschraube in Fig. 2 minimal hervorsteht.

Die Befestigungsschraube 2 wird in eine Grundfläche 6, beispielsweise eine Plattform einer Unterwasserturbine oder ähnlichem, eingeschraubt. Die Grundfläche 6 kann aus zwei getrennten Elementen bestehen, die durch die Befestigungsschraube 2 verbunden werden sollen. Hierbei wird die Befestigungsschraube 2 über eine Mutter 4 in der Grundfläche 6 gesichert. Dies erfolgt insbesondere über eine Dehnung der Befestigungsschraube 2 und anschließendes Aufschrauben der Mutter 4. Um nun die Befestigungsschraube 2, insbesondere das freiliegende Gewinde 8, vor Verunreinigungen und Verschleiß zu schützen, wird die Schutzkappe 1 auf die Befestigungsschraube 2 aufgesetzt. Insbesondere dient die Schutzkappe 1 dazu, das freiliegende Gewinde 8 der Befestigungsschraube 2 in einer Unterwasseranwendung dauerhaft gegenüber der Unterwasserumgebung zu schützen, die durch Salzwasser, Druck, Schmutz, maritimes Wachstum, etc. das Gewinde 8 der Befestigungsschraube 2 beschädigen kann.

Die Schutzkappe 1 wird an der Befestigungsschraube 2 über eine Schraube 10 gesichert. Die Schraube 10 wird dabei durch eine Durchgangsöffnung 12 in der Schutzkappe 1 in eine Bohrung 14 in der Befestigungsschraube 2 eingeführt. Durch die Schraube 10 wird eine sichere Verbindung der Schutzkappe 1 und der Schraube 2 sichergestellt. Des Weiteren stellt dies eine einfache Montage und Demontage der Schutzkappe 1 sicher, da hier nur auf die Schraube 10 zugegriffen werden muss und diese, sofern sie bei einer Demontage der Schutzkappe 1 beschädigt wird, einfach ausgetauscht werden kann.

Vorzugsweise ist zwischen der Schutzkappe 1 und der Schraube 10 eine Dichtung 16 vorgesehen, um die Schutzkappe 1 gegenüber der Schraube 10 abzudichten. Die Schutzkappe 1 weist eine Dichtung 18 auf, die die Form eines Dichtrings oder mehrerer Dichtringe haben kann. Die Dichtung 18 ist dabei an dem offenen Ende der Schutzkappe 1 angeordnet und dichtet dieses offene Ende gegenüber der Befestigungsschraube 2 bzw. der Mutter 4 ab.

Wie im Vergleich zwischen Figuren 1 und 2 gesehen werden kann, kann durch die Dichtung 18 in jedem Fall sichergestellt werden, dass die Schutzkappe 1 abgedichtet ist und somit die Schraube 2 gegenüber der Umgebung schützen kann. Dies ist unabhängig von einem Abstand X zwischen der Grundfläche 6 und der Schutzkappe 1. Wie bereits oben erläutert, ist in Fig. 1 die Schutzkappe 1 gegenüber der Grundfläche 6 um den Abstand X beabstandet, wobei die Dichtung 18 die Öffnung der Schutzkappe 1 abdichtet. In Fig. 2 hingegen liegt die Schutzkappe 1 direkt auf der Grundfläche 6 auf und der Abstand X ist nicht vorhanden. In diesem Fall kann die Schutzkappe 1 direkt gegenüber der Grundfläche 6 abdichten, wobei durch die Dichtung 18 eine verbesserte Dichtwirkung sichergestellt werden kann.

Zusätzlich kann die Schutzkappe 1 mit Schmiermittel 20 gefüllt sein. Dieses Schmiermittel 20 kann vorab in die Schutzkappe gefüllt werden. Beim Aufbringen der Schutzkappe 1 auf die Befestigungsschraube 2 kann überschüssiges Schmiermittel 20, das durch die Befestigungsschraube 2 verdrängt wird, durch die Öffnung 12 herausgedrückt werden, sofern erforderlich. Das Schmiermittel 20 dient ebenfalls dem Schutz der Befestigungsschraube 2 bzw. des Gewindes 8.

Durch das Schmiermittel 20, das in der Schutzkappe 1 vorgesehen sein kann, kann ein zusätzlicher Schutz der Befestigungsschraube 2 vor Beschädigung und Korrosion, oder anderem Verschleiß, insbesondere ein Korrosionsschutz, sichergestellt werden, selbst wenn Wasser oder Ähnliches in die Schutzkappe 1 eintreten sollte. Sofern eine der vorgesehenen Dichtungen 16, 18 versagt, wird sich der Druck innerhalb der Schutzkappe 1 mit dem umgebenden Seewasser ausgleichen. Das eingetretene Seewasser kann sich dann mit dem Schmiermittel in der Schutzkappe 1 zu einer Emulsion verbinden. Eine solche Wasser-Schmiermittel-Emulsion beeinträchtigt die Schutzumgebung der Schutzkappe 1 nicht und stellt somit nach wie vor den Schutz vor Verschleiß sicher. Vorzugsweise kann ein biologisch abbaubares Schmiermittel verwendet werden, um die Umwelt nicht zu schädigen.

Die Schutzkappe 1 besteht vorzugsweise aus PBT oder einem ähnlichen Material, da dies robust, temperaturbeständig und wasserbeständig ist und somit ideale Voraussetzungen für eine Unterwasseranwendung bereitstellt. Vorzugsweise ist die Schutzkappe 1 an der äußeren Mantelfläche 23 glatt ausgebildet, wodurch das Risiko verringert wird, dass sich Gegenstände wie Fischernetze oder anderes an der Schutzkappe 1 verhängen. Durch die Verbindung der Schutzkappe 1 mit der Befestigungsschraube 2 über die Schraube 10 wird eine robuste Verbindung bereitgestellt, die auch permanenten Wasserströmen und Fremdkörpern wie Treibholz, Eis und anderen Elementen, standhalten kann.

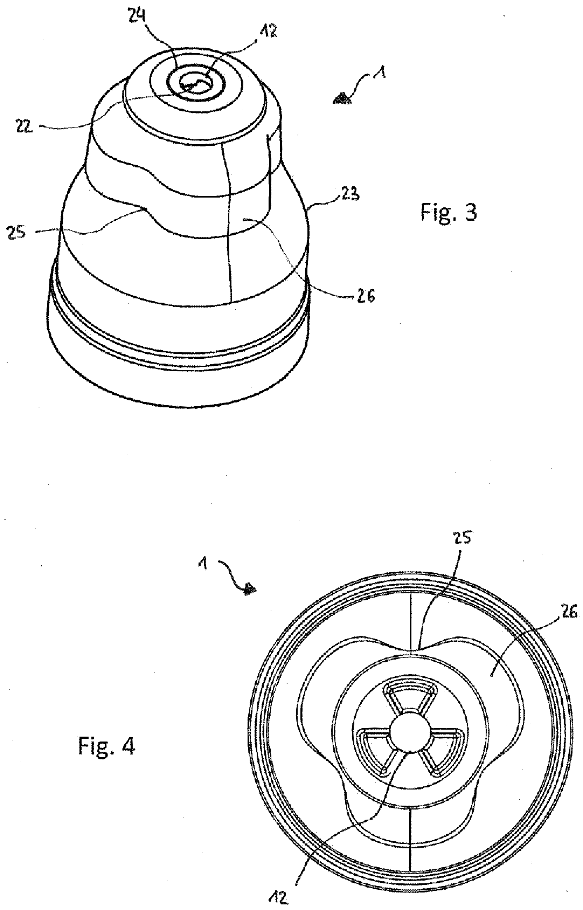

Wie in Figuren 3 und 4 zu sehen ist, ist eine geteilte Kontaktfläche 22 zwischen der Schutzkappe 1 und der Befestigungsschraube 2 vorgesehen. Die Kontaktfläche 22 dient als primäre Auflage zwischen der Planfläche der Befestigungsschraube 2 und der Schutzkappe 1, um einen direkten Kraftfluss der Sicherungsschraube 10, der Schutzkappe 1 und der Befestigungsschraube 2 zu gewährleisten, um ein Setzungsverhalten einerseits der Schutzkappe 1 und anderseits der Dichtungen aufgrund von Spannungen zu reduzieren bzw. zu vermeiden. Diese ermöglicht eine steife Schraubverbindung und stellt gleichzeitig Pfade zum Auslass von überschüssigem Schmiermittel 20 innerhalb des Innenraums der Schutzkappe 1 während der Montage bereit.

Um die Dichtung zwischen der Schraube 10 und der Schutzkappe 1 weiter zu verbessern, kann zusätzlich zu der Dichtung 16 ein Kragen 24 vorgesehen sein. Dieser Kragen 24 dient dazu, die Dichtungskompression und damit die Dichtfähigkeit der Dichtung 16 zu verbessern. Die Gewindeschnittfläche zwischen dem Gewinde 8 und der Mutter 4 kann über ein flüssige Dichtmittel oder eine separate Dichtung zwischen der Mutter und der Gewindestruktur 8 abgedichtet werden.

Die Dichtung 18 am offenen Ende der Schutzkappe 1 dichtet zwischen der Mutteraußenfläche und der Schutzkappe 1 ab. Hierbei ist eine zylindrische Form der Mutter 4 vorteilhaft, aber nicht zwingend erforderlich. Eine radiale Ausführung bzw. Kompression der Dichtung 18 ermöglicht eine Toleranzflexibilität in axialer Richtung für den Gewindeüberstand X. Wenn der Gewindeüberstand X variiert, wie in Bezug auf Figuren 1 und 2 beschrieben ist, kann die Schutzkappe 1 nach wie vor fest auf der Befestigungsschraube 2 aufgebracht sein und die Dichtung 18 dichtet die Schnittstelle zwischen der Mutter 4 und der Schutzkappe 1 an einer anderen axialen Position ab.

Die äußere Mantelfläche 23 der Schutzkappe 1 kann zumindest in einem Teilbereich Einkerbungen 25 aufweisen. Diese Einkerbungen können verwendet werden, um mit einem Werkzeug oder händisch, die Schutzkappe 1 aufzunehmen und auf der Befestigungsschraube 2 aufzubringen. Zusätzlich dienen die Einkerbungen 25 dazu, die Schutzkappe entlang des Gewindes 8 der Befestigungsschraube 2 zu führen, was eine zusätzliche Robustheit bewirkt. Zwischen den Einkerbungen 25 sind Ausbuchtungen 26 gebildet, die als Taschen zur Aufnahme von Schmiermittel dienen können. Die Einkerbungen 25 können als axiale Einkerbungen ausgebildet sein oder in Form einer Rotationswendelnut.

Vorzugsweise kann die Schutzkappe 1 ohne exponierte Stege ausgebildet sein, so dass interne Fertigungsspannungen auf ein Minimum reduziert werden können. Dies kann auf Dauer Risse durch Temperaturschwankungen, Setzungsverhalten etc. vermeiden bzw. reduzieren. Diese Form hat ebenfalls den Vorteil, dass eine Bindenaht (Verbindung von min. zwei Schmelzfronten) vermieden wird, die wiederrum zu einer möglichen Rissbildung durch innere und äußere Einflüsse beitragen könnte.

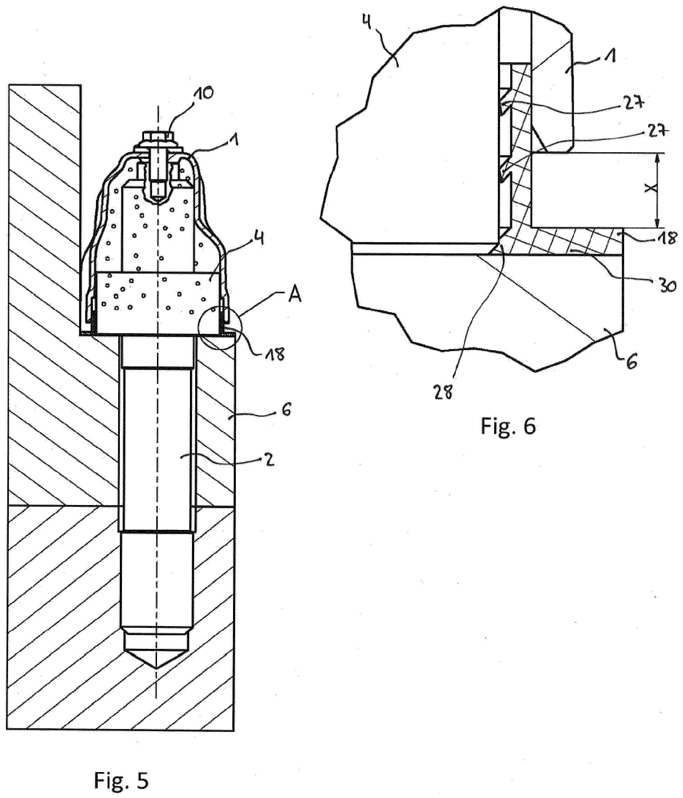

Die Dichtung 18 ist mit zumindest einer Dichtlippe versehen, und kann aus einem Element bestehen, das mehrere radiale Dichtlippen 27 aufweist, wie in Figuren 5 und 6 dargestellt ist. Diese Dichtlippen 27 dichten zusätzlich gegenüber der Mutter 4 ab. Im unteren Bereich kann die Dichtung 18 eine Abschrägung 28 zur axialen Abdichtung aufweisen, die zum einen der Abdichtung gegenüber der Mutter 4 dient und zum anderen eine Abdichtung zwischen der Mutter 4 und der Grundfläche 6 bereitstellt. Im unteren Bereich kann die Dichtung 18 des Weiteren einen Flansch 30 aufweisen, der eine weitere Abdichtung gegenüber der Grundfläche 6 ermöglicht. Durch den Flansch 30 wird somit der Schutzbereich, der durch die Schutzkappe 1 geschützt wird, nicht nur auf den Gewindeabschnitt 8 der Befestigungsschraube 2 beschränkt, sondern dehnt sich auch auf die komplette Mutter 4 und einen Teil der Grundfläche 6 aus. Auf diese Weise kann sichergestellt werden, dass nicht nur das freiliegende Gewinde 8 vor Umwelteinflüssen geschützt ist, sondern dass auch die Mutter 4 im Laufe der Zeit unbeschädigt bleibt und somit nachgezogen werden kann, sofern dies erforderlich sein sollte. Zusätzlich wird dadurch, an der Grundfläche 6, eine saubere Anlagefläche für das Spannwerkzeug der Befestigungsschraube 2 vorgehalten.

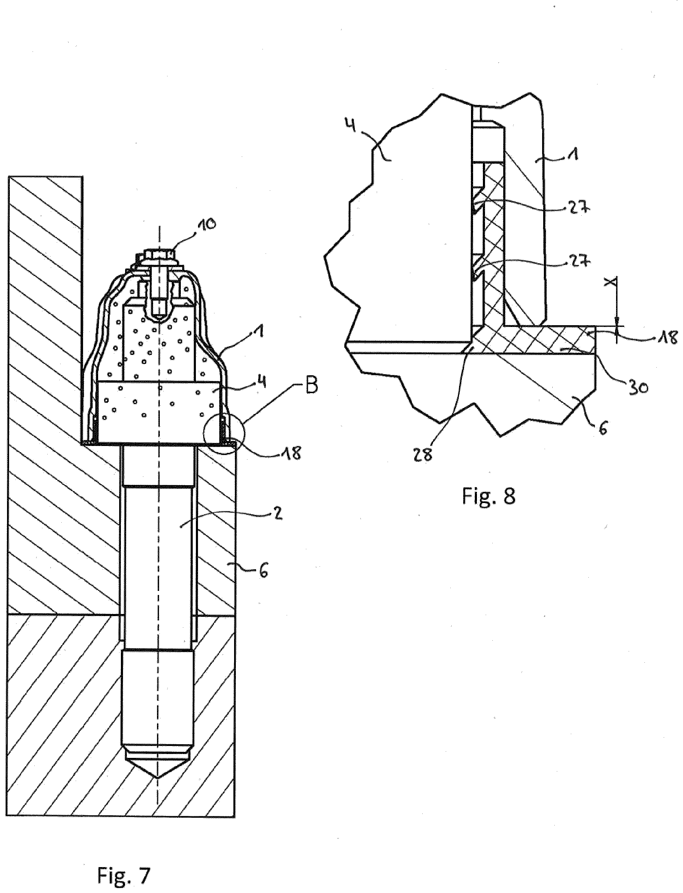

Wie im Vergleich zwischen den Figuren 5, 6 bzw. 7, 8 gesehen werden kann, dient die Dichtung 18 sowohl zur Abdichtung in dem Fall, in dem ein Abstand X zwischen der Schutzkappe 1 und der Grundfläche 6 besteht (Figuren 5 und 6) und in dem Fall, bei dem die Schutzkappe 1 direkt in Kontakt mit der Dichtung 18 und damit der Grundfläche 6 ist (Figuren 7 und 8). Über die Dichtung 18 kann somit der Höhenunterschied X zwischen der Schutzkappe 1 und der Grundfläche 6 ausgeglichen werden, wobei in jedem Fall eine sichere Abdichtung zwischen der Schutzkappe 1 und der Grundfläche 6 bzw. der Schutzkappe 1 und der Mutter 4 und damit der Befestigungsschraube 2 sichergestellt werden kann.

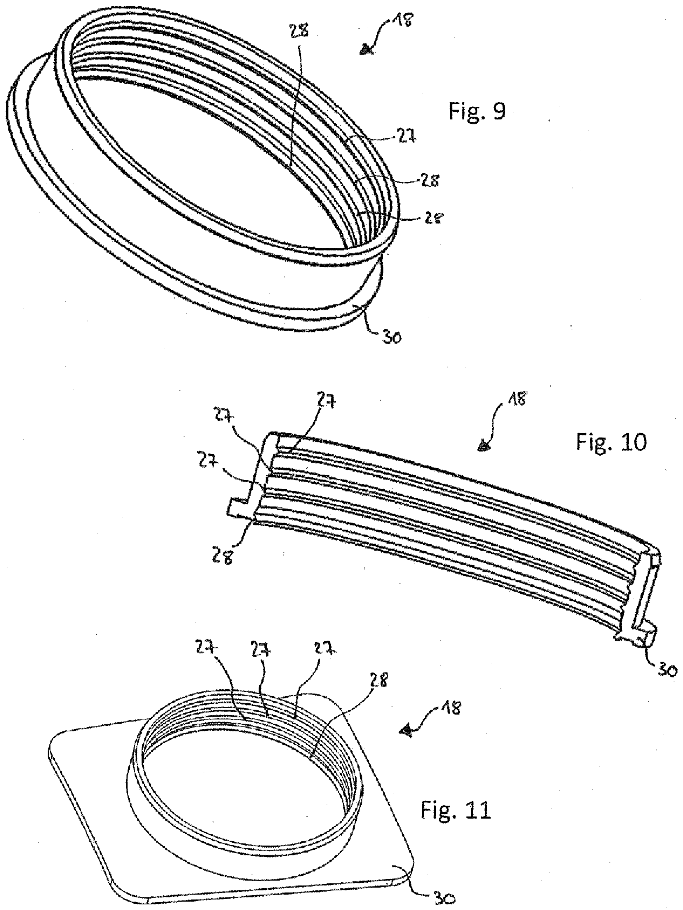

Die Dichtung 18 kann aus mehreren O-Ringen bestehen, die übereinander angeordnet sind (nicht dargestellt). Alternativ kann die Dichtung ein komplettes Dichtelement sein, wie es in den Figuren 9 bis 11 detailliert beschrieben wird. Wie in Fig. 9 zu sehen ist, ist die Dichtung 18 eine zylinderförmige Dichtung, an deren innerer Mantelfläche mehrere Dichtlippen 27 vorgesehen sind, wie sie bereits zuvor beschrieben wurden. Die oberen Dichtlippen 27 dichten dabei die Schutzkappe 1 gegenüber der Mutter 4 ab und können entweder als sich radial schräg erstreckende Dichtlippen 27 ausgebildet sein, wie sie in Figuren 5 bis 8 gezeigt sind, oder sich als rein radial erstreckende Dichtlippen 27 ausgeführt sein, wie sie in Fig. 10 zu sehen sind. Zusätzlich weist die Dichtung 18 eine Abschrägung 28 auf, die eine sich radial schräg erstreckende Dichtlippe 28 darstellt. Diese Dichtlippe 28 dient, wie bereits zuvor beschrieben, zur Abdichtung zwischen der Schutzkappe 1, der Mutter 4 und der Grundfläche 6. Zusätzlich kann die Dichtung 18 einen Flansch 30 aufweisen, wie er bereits zuvor beschrieben wurde. Dieser Flansch 30 kann entweder als radialer Ring ausgeführt sein, wie in Figuren 9 und 10 zu sehen ist, oder kann alternativ eine größere radiale Ausdehnung aufweisen, wie in Fig. 11 gezeigt ist. In diesem Fall kann der Flansch 30 eine komplette Abdeckung der Grundfläche 6 im Bereich der Befestigungsschraube 2 bereitstellen. Dies stellt eine zusätzliche Dichtung zwischen der Schutzkappe 1, der Mutter 4 und der Grundfläche 6 bereit.

Die Dichtung 18, insbesondere in dem Fall, in dem diese aus mehreren Dichtringen besteht, kann vor der Montage der Schutzkappe 1 über ein Montagewerkzeug 32 auf die Befestigungsschraube 2 aufgebracht werden. Das Montagewerkzeug 32 kann aus einem zylindrischen Körper 34 bestehen, auf dem die Dichtung 18, insbesondere mehrere Dichtringe, oder auch mehrere Dichtungen 18 angeordnet werden können. An einem Ende des Montagewerkzeugs 32 können Halteelemente 36 gebildet sind. Die Halteelemente 36 sind dabei so ausgestaltet, dass sie zwischen sich die Befestigungsschraube 2 und Mutter 4 aufnehmen können. Zur Montage der Dichtung 18 wird das Montagewerkzeug 32 auf die Mutter 4 aufgesetzt. Über das Montagewerkzeug 32 kann dann die Dichtung 18 entlang des zylindrischen oder kegligen Körpers 34 bis zur Mutter 4 und von dem Montagewerkzeug 32 herunter bewegt werden. Wenn sich die Dichtung 18 nicht mehr auf dem Montagewerkzeug 32 befindet, sondern um die Mutter 4 angeordnet ist, kann das Montagewerkzeug 32 entfernt und anschließend die Schutzkappe 1 auf die Befestigungsschraube 2 aufgesetzt werden.

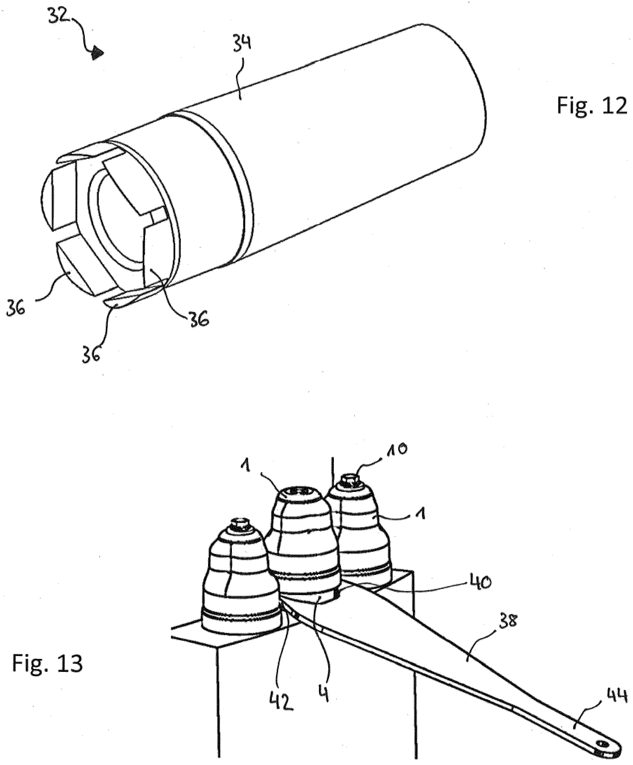

Zur Demontage der Schutzkappe 1 kann ein Demontagewerkzeug 38 verwendet werden, wie es in Fig. 13 gezeigt ist. Das Demontagewerkzeug 38 weist eine Aussparung 40 auf, die um die Mutter 4 in der Art eines Schraubenschlüssel greifen kann. Im Bereich der Aussparung 40 kann das Demontagewerkzeug 38 eine Verjüngung aufweisen, um einfach unter die Schutzkappe 1, bzw. zwischen die Schutzkappe 1 und die Grundfläche 6, eingeführt werden zu können. Um die Schutzkappe 1 zu demontieren, wird das Demontagewerkzeug 38 zwischen die Schutzkappe 1 und die Grundfläche 6 geführt, wobei die Aussparung 40 um die Mutter 4 greift. Über einen Griff 44 kann in Form einer Hebelbewegung die Schutzkappe 1 nach oben und weg von der Grundfläche 4 gehebelt und somit entfernt werden. Zuvor wird die Schraube 10 gelöst, um die Schraubverbindung zwischen der Schutzkappe 1 und der Befestigungsschraube 2 zu lösen.

Durch die hier beschriebene Schutzkappe 1 kann somit ein sicherer und dauerhafter Schutz einer Befestigungsschraube gewährleistet werden, wie sie beispielsweise in Unterwasseranwendung verwendet wird. Insbesondere kann eine Korrosion oder sonstige Verunreinigung eines freiliegenden Gewindes der Befestigungsschraube verhindert werden.

### Bezugszeichenliste

- 1: Schutzkappe
- 2: Befestigungsschraube
- 4: Mutter
- 6: Grundfläche
- 8: freiliegende Gewinde
- 10: Schraube
- 12: Durchgangsbohrung
- 14: Bohrung
- 16: Dichtung
- 18: Dichtung
- 20: Schmiermittel
- 22: Kontaktfläche
- 23: äußere Mantelfläche
- 24: Kragen
- 25: Einkerbungen
- 26: Ausbuchtungen
- 27: Dichtlippen
- 28: Abschrägung
- 30: Flansch
- 32: Montagewerkzeug
- 34: zylindrischen Körper
- 36: Halteelemente
- 38: Demontagewerkzeug
- 40: Aussparung
- 42: Verjüngung
- 44: Griff
- X: Abstand

## Patentansprüche

1. Schutzkappe (1) für eine Befestigungsschraube (2), wobei die Schutzkappe (1) einen zylindrischen Körper mit einer inneren und einer äußeren Mantelfläche (23) aufweist, wobei der zylindrische Körper an einem Ende geschlossen ist und mit dem anderen, offenen Ende auf die Befestigungsschraube (2) aufschiebbar ist, wobei die innere Mantelfläche eine Innenaufnahme bildet, in der die Befestigungsschraube (2) aufnehmbar ist,
wobei an dem geschlossenen Ende eine Durchgangsbohrung (12) vorgesehen ist, durch die eine Schraube (10) durchführbar ist, wobei die Schraube (10) dazu ausgebildet ist, in ein entsprechendes Bohrloch (14) in der Befestigungsschraube (2) einzugreifen, um die Schutzkappe (1) mit der Befestigungsschraube (2) zu verbinden,
**dadurch gekennzeichnet, dass** eine Dichtung (18) an dem offenen Ende des zylindrischen Körpers vorgesehen ist, die dazu ausgebildet ist, die Schutzkappe (1) gegenüber der Befestigungsschraube (2) abzudichten, wobei die Dichtung (18) an der inneren Mantelfläche der Schutzkappe (1) angeordnet ist,
wobei die Dichtung (18) mit zumindest einer Dichtlippe (27, 28) versehen ist, die sich von der inneren Mantelfläche radial nach innen erstreckt.

2. Schutzkappe gemäß Anspruch 1, wobei eine weitere Dichtung (16) zwischen der Schraube (10) und dem geschlossenen Ende angeordnet ist.

3. Schutzkappe gemäß einem der vorhergehenden Ansprüche, wobei ein Innenraum der Schutzkappe (1) mit Schmiermittel und/oder Korrosionsschutzmittel (20) gefüllt ist.

4. Schutzkappe gemäß einem der vorhergehenden Ansprüche, wobei sich die Dichtung (18) von der inneren Mantelfläche über den Rand des offenen Endes bis zur äußeren Mantelfläche (23) erstreckt.

5. Schutzkappe gemäß einem der vorhergehenden Ansprüche, wobei die Dichtung (18) mit mehreren Dichtlippen (27, 28) versehen ist, die sich von der inneren Mantelfläche radial nach innen erstrecken.

6. Schutzkappe gemäß einem der vorhergehenden Ansprüche, wobei die Dichtung (18) mehrere, axial übereinander angeordnete Dichtringe umfasst.

7. Schutzkappe gemäß einem der vorhergehenden Ansprüche, wobei die Schutzkappe (1) zumindest an der äußeren Mantelfläche (23) mit der Dichtung (18) überzogen ist.

8. Schutzkappe gemäß einem der vorhergehenden Ansprüche, wobei die Dichtung (18) einen Flansch (30) umfasst, der sich über den zylindrischen Körper in radialer Richtung nach außen erstreckt.

## Claims

1. Protective cap (1) for a fastening screw (2), wherein the protective cap (1) has a cylindrical body with an inner and an outer casing surface (23), wherein the cylindrical body is closed at one end and by way of the other open end can be pushed onto the fastening screw (2), wherein the inner casing surface forms an inner receptacle in which the fastening screw (2) can be received,
wherein provided at the closed end is a through bore (12) through which a screw (10) can be passed, wherein the screw (10) is designed to engage in a corresponding bore (14) in the fastening screw (2) in order to connect the protective cap (1) to the fastening screw (2),
**characterized in that**
provided on the open end of the cylindrical body is a seal (18) which is designed to seal the protective cap (1) in relation to the fastening screw (2), wherein the seal (18) is disposed on the inner casing surface of the protective cap (1),
wherein the seal (18) is provided with at least one sealing lip (27, 28) which extends radially inwards from the inner casing surface.

2. Protective cap according to Claim 1, wherein a further seal (16) is disposed between the screw (10) and the closed end.

3. Protective cap according to one of the preceding claims, wherein an interior of the protective cap (1) is filled with lubricant and/or corrosion inhibitor (20).

4. Protective cap according to one of the preceding claims, wherein the seal (18) extends from the inner casing surface over the periphery of the open end to the outer casing surface (23).

5. Protective cap according to one of the preceding claims, wherein the seal (18) is provided with a plurality of sealing lips (27, 28) which extend radially inwards from the inner casing surface.

6. Protective cap according to one of the preceding claims, wherein the seal (18) comprises a plurality of seal rings which are disposed axially on top of one another.

7. Protective cap according to one of the preceding claims, wherein the protective cap (1) is at least on the outer casing surface (23) covered by the seal (18).

8. Protective cap according to one of the preceding claims, wherein the seal (18) comprises a flange (30) which extends in the radial direction outwards over the cylindrical body.

## Revendications

1. Capuchon protecteur (1) pour une vis de fixation (2), le capuchon protecteur (1) présentant un corps cylindrique pourvu d'une surface latérale intérieure et d'une surface latérale extérieure (23), le corps cylindrique étant fermé à une extrémité et pouvant être emmanché par l'autre extrémité ouverte sur la vis de fixation (2), la surface latérale intérieure formant un logement intérieur dans lequel la vis de fixation (2) peut être reçue,
un alésage traversant (12) étant prévu à l'extrémité fermée, à travers lequel une vis (10) peut être passée, la vis (10) étant conçue pour s'engager dans un alésage correspondant (14) de la vis de fixation (2) afin de relier le capuchon de protection (1) à la vis de fixation (2) ,
**caractérisé**
**en ce qu'**il est prévu, à l'extrémité ouverte du corps cylindrique, un joint (18) qui est conçu pour assurer l'étanchéité du capuchon protecteur (1) par rapport à la vis de fixation (2), le joint (18) étant disposé sur la surface latérale intérieure du capuchon protecteur (1), le joint (18) étant pourvu d'au moins une lèvre d'étanchéité (27, 28) qui s'étend radialement vers l'intérieur depuis la surface latérale intérieure.

2. Capuchon de protection selon la revendication 1, dans lequel un autre joint d'étanchéité (16) est disposé entre la vis (10) et l'extrémité fermée.

3. Capuchon de protection selon l'une quelconque des revendications précédentes, dans lequel un espace intérieur du capuchon de protection (1) est rempli de lubrifiant et/ou d'agent de protection contre la corrosion (20).

4. Capuchon de protection selon l'une quelconque des revendications précédentes, dans lequel le joint d'étanchéité (18) s'étend depuis la surface latérale intérieure sur le bord de l'extrémité ouverte jusqu'à la surface latérale extérieure (23).

5. Capuchon de protection selon l'une quelconque des revendications précédentes, dans lequel le joint d'étanchéité (18) est pourvu d'une pluralité de lèvres d'étanchéité (27, 28) qui s'étendent radialement vers l'intérieur depuis la surface latérale intérieure.

6. Capuchon de protection selon l'une quelconque des revendications précédentes, dans lequel le joint d'étanchéité (18) comprend plusieurs bagues d'étanchéité disposées axialement les unes au-dessus des autres.

7. Capuchon de protection selon l'une quelconque des revendications précédentes, dans lequel le capuchon de protection (1) est revêtu du joint d'étanchéité (18) au moins sur la surface latérale extérieure (23).

8. Capuchon de protection selon l'une quelconque des revendications précédentes, dans lequel le joint d'étanchéité (18) comprend une bride (30) qui s'étend vers l'extérieur dans la direction radiale au-dessus du corps cylindrique.
